Europäisches Patentamt

European Patent Office

Office européen des brevets

(19)

(11) **EP 1 258 840 A1**

(12) **EUROPEAN PATENT APPLICATION**

(43) Date of publication:
**20.11.2002 Bulletin 2002/47**

(51) Int Cl.⁷: **G07C 9/00**

(21) Application number: **01201808.1**

(22) Date of filing: **15.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Koninklijke KPN N.V.**
**9726 AE Groningen (NL)**

(72) Inventors:
• **Boaz, Simon Gelbord**
**1016 VS Amsterdam (NL)**

• **Roelofsen, Gerrit**
**2331 AH Leiden (NL)**

(74) Representative: **Wuyts, Koenraad Maria et al**
**Koninklijke KPN N.V.,**
**Intellectual Property Group,**
**P.O. BOX 95321**
**2509 CH The Hague (NL)**

(54) **Method and system for processing identification data**

(57) Method and system for processing identification information. Via input means (3,4) first instances of a (fingerprint related) identification data string and a masking data string is entered. Processing means (5) mix both of said first instances one another and store the result data string in data storage means (6). In an identification stage a second instance of said identification data string and a second instance of said masking data string are entered. Said previously stored result data string is retrieved and the processing means (5) combines two out of the three data strings, viz. said second instances of the identification data string and of said masking data string, and said retrieved result data string, one another and investigate the combining result whether it is identical or not-identical to the remaining one of said three data strings. Said input means (3,4) may be fit for entering biometric data.

FIG. 1

EP 1 258 840 A1

## Description

### FIELD OF THE INVENTION

The invention refers to a method for processing identification information. Besides, the invention refers to a system also fit for said method. In particular, the invention refers to but is not restricted to biometric information.

### BACKGROUND

The use of biometric methods for the identification of persons is growing and also the number of methods and systems used for this purpose is growing. Though the techniques for biometric identification have matured, there are major problems.

A first problem is the unwillingness of people to provide their personal biometric data for identification purposes. One reason for this is that people fear that the receiver (verifier) of the data can misuse this personal data. The second reason is the psychological feeling associated with providing personal biometric data such as fingerprints or retina scans.

A second problem is the threat that another party could masquerade as the valid party by obtaining a copy of the biometric data. For example by obtaining a copy of another person's fingerprint, one could masquerade as that person. Obtaining copies of data used for biometric identification is more sensitive for misuse than is the case for copies of other sorts of identification data since biometric identification data can not easily be replaced with a new version of the data.

### SUMMARY

It should be noted that this invention is not only applicable to biometric identification data, but could also be used for other form of identification data, e.g. a Personal Identification Number (PIN) etc.

An aspect of the invention is masking the original identification data by "mixing" that original data with masking data and only storing, or otherwise providing, the resulting "mixed" data.

The invention solves the afore mentioned problems for the use of biometric data as follows. The first problem is solved by replacing the original identification data by a masked version of that data. Only the masked data can -in due time- be used as a basis for identification without any chance to misuse the original personal data during the person's absence.

The second problem is solved by replacing the original identification data by a masked version of that data because the original identification data is not to be stored and only can be revealed with the help of the relevant person. So, the chance that the person's personal data is compromised is minimized. In case of a compromise of the (stored) masked data, it is relatively easy to change the masking data.

According to another aspect of the present invention, the following steps for preparation and storage of said identification information are executed:

- a first instance of an identification data string is generated;
- a first instance of a masking data string is generated;
- said first instance of the identification data string and said first instance of the masking data string are combined one another, giving a result data string;
- the result data string is stored in data storage means; said previous steps being followed by next investigation steps:

- a second instance of said identification data string is generated;
- a second instance of said masking data string is generated;
- optionally said result data string is retrieved from said storage means;
- two out of the last mentioned three data strings, viz. said second instance of the identification data string, said second instance of said masking data string and said retrieved result data string, are combined one another and the combining result is investigated whether it is identical or not-identical to the remaining one of said three data strings.

### DETAILED DESCRIPTION OF THE INVENTION

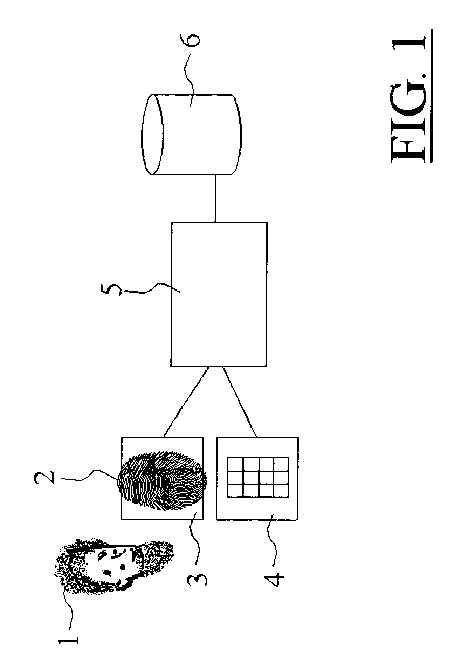

Figure 1 illustrates an embodiment of a system for enabling the method according to the invention, in which the following steps are executed for preparation and storage of identification information.

A person 1 generates a first instance of an identification data string, viz. a data string representing the person's fingerprint 2, by means of a fingerprint recorder 3. To the end of masking the person's recorded fingerprint, a masking data string is generated by the person 1 who inputs, for example via a keyboard 4, the person's password (PIN code) which is used as masking data string.

Subsequently, said first instance of the identification data string and said first instance of the masking data string are mixed one another by means of binary combining (as modulo 2 adding bit-by-bit), executed in a processor 5, giving a result data string (masked data string) which is stored in data storage means 6.

Said steps for preparation and storage of said identification information are followed, in due time (viz. when the person 1 has to prove the person's identity) by next steps for retrieval and investigation of the stored identification information versus the person's new identification input, viz. a second instance of said identification data string and a second instance of said masking data string.

In this identification step sequence a second instance of said identification data string is generated by asking the person 1 to input the person's fingerprint (a second instance) again. Also a second instance of said masking data string is generated by asking the person to input the person's password again. After the person has input the requested second instances of the fingerprint and password, said result data string is retrieved -by the processor 5-from said storage means 6.

The person's identity is investigated as follows. Two out of the last mentioned three data strings, viz. said second instance of the identification data string, said second instance of said masking data string and said retrieved result data string read from the storage means 6, are combined one another and the combining result is investigated whether it is identical or not-identical to the remaining one of said three data strings.

There are three options, none of them having obvious advantages above the other ones. Said second instance of the identification data string (the recorded fingerprint) and said second instance of said masking data string (the entered password) may be binary combined one another, the combining result being investigated then whether it is identical or not-identical to said retrieved result data string, which was previously processed from the earlier (first) instances of (if correct) the same fingerprint and password.

Equally -as a second option- said second instance of said identification data string and said retrieved result data string may be combined one another whereafter the combining result is investigated whether it is identical or not-identical to said second instance of the masking data string (the entered password). As a third option, the second instance of the masking data string and the retrieved result may be combined one another and the combining result is investigated whether it is identical or not-identical to the second instance of the identification data string (the entered fingerprint).

Although said identification data string preferrably comprises biometric data, it may also comprise other kinds of data. It is clear that especially the use of biometric data or, generally spoken, data strictly bound to persons (or even to subjects) has the draw-back of not being changeable (like passwords) and liable to misuse, and that the invention therefore aims to provide a solution for that problem.

It is noted that, although said masking data string comprises alphanumeric characters, the masking data string also may comprise other data, like information which can derived from other kinds of codes, for instance bar codes. The masking data string even may comprise biometric data, for instance the recorded fingerprint of another finger (of the same or another person). The masking data string could also be generated by the same fingerprint recorder as used for entering the identification data. The person 1 could use a "personal masking finger cap", having a specific "personal masking pattern", said cap being placed over the person's finger before inputting, via the fingerprint recorder, said personal masking data.

The process as described above is summarized here below in a mathematical form:

> F' is the original, first instance of the digital identification string representing the fingerprint of person 1;
> C' is the first instance of the personal masking string, entered by person 1;
> R is the result from combining F' and C', stored in storage means 6 and retrievable afterwards, viz. at the moment of identification;
> F" is the string representing the second fingerprint of person 1 at the moment of identification: the second instance of the digital identification string;
> C" is the second instance of the personal masking string at the moment of identification, entered by person 1.

Initially, person 1 provides a fingerprint string F' as well as a masking string C'. String C' might be provided by person 1 as a deliberately chosen password or may randomly be generated by an outside source. In any case person 1 has to keep (at least in mind) a copy of string C'. Strings F' and C' are combined (mixed) by means of bit-by-bit modulo 2 addition:

$$R = F' [+] C'$$

[+]: bit wise addition modulo 2

The combining function could also be a more complex function such as a cryptographic algorithm in which the information contained in F' or C' is used as key. The resulting string R is stored on the storage means 6. When, in due time, person 1 has to to identify or authorize himself, again a fingerprint is taken: the second instance F" of the identification string, while person 1 is asked to enter his password: to be used as the second instance C" of the masking string. Subsequently F" and C" are combining modulo 2 and compared with the string R stored in storage means 6, to decide whether the person's identification is correct or not-correct. In a short notation, this process could be represented as:

$$F" [+] C" <=?> R$$

As a second option F" is combined with the result string R retrieved from the storage means 6 and the result is compared with C":

$$F" [+] R <=?> C"$$

As a third option C" is combined with the result string R and the result is compared with F":

$$C'' [+] R <=?> F''$$

## Claims

1. Method for processing identification information, **characterized by** the following steps for preparation and storage of said identification information:

   - a first instance of an identification data string is generated;
   - a first instance of a masking data string is generated;
   - said first instance of the identification data string and said first instance of the masking data string are combined one another, giving a result data string;
   - the result data string is stored; said steps being followed by the following steps:

   - a second instance of said identification data string is generated;
   - a second instance of said masking data string is generated;
   - two out of said second instance of the identification data string, said second instance of said masking data string and said result data string, are combined one another and the combined result is investigated whether it is identical or not-identical to the remaining one of said three data strings.

2. Method according to claim 1, **characterized in that** said second instance of the identification data string and said second instance of the masking data string are combined one another and the combining result is investigated whether it is identical or not-identical to said result data string.

3. Method according to claim 1, **characterized in that** said second instance of the identification data string and said retrieved result data string are combined one another and the combining result is investigated whether it is identical or not-identical to said second instance of the masking data string.

4. Method according to claim 1, **characterized in that** said second instance of the masking data string and said retrieved result data string are combined one another and the combining result is investigated whether it is identical or not-identical to said second instance of the identification data string.

5. Method according to claim 1, **characterized in that** said identification data string comprises biometric data.

6. Method according to claim 5, **characterized in that** said identification data string is derived from a fingerprint.

7. Method according to claim 1, **characterized in that** said masking data string comprises alphanumeric characters.

8. Method according to claim 1, **characterized in that** said masking data string comprises biometric data.

9. Method according to claim 1 wherein said result data is stored in data storage means and prior to the combining step is retrieved from said storage means.

10. System for processing identification information, **characterized by** input means (3) for entering a first instance of an identification data string and input means (4) for entering a first instance of a masking data string, as well as processing means (5) for mixing said first instance of the identification data string and said first instance of the masking data string one another and for storing the result data string in data storage means (6); the system, moreover, comprising input means (3) for entering a second instance of said identification data string, input means (4) for entering a second instance of said masking data string and means (5) for retrieving said result data string from said storage means (6); whereas said processing means (5) combine two out of the last mentioned three data strings, viz. said second instance of the identification data string, said second instance of said masking data string and said retrieved result data string, one another and investigate whether the combining result is identical or not-identical to the remaining one of said three data strings.

11. System according to claim 10, **characterized in that** said input means (3) for entering said instances of the identification data string or said input means (4) for entering said instances of the masking data string are fit for entering biometric data.

12. System according to claim 10, **characterized in that** said input means (4) for entering said instances of the masking data string are fit for entering alphanumeric characters.

FIG. 1

**European Patent Office**

# EUROPEAN SEARCH REPORT

Application Number

EP 01 20 1808

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 38118 A (DIGITAL SECURITY CONTROLS LTD) 29 June 2000 (2000-06-29) * page 8, line 1 - page 9, line 35 * * figure 4 * | 1,2,5-12 | G07C9/00 |
| A | WO 99 54851 A (KARMANN KLAUS PETER ;SIEMENS AG (DE)) 28 October 1999 (1999-10-28) * page 3, line 21 - page 4, line 26 * * claims; figures * | 1,5-12 | |
| A | US 5 712 912 A (STOIANOV ALEXEI  ET AL) 27 January 1998 (1998-01-27) * column 1, line 58 - column 2, line 65 * * figure 2 * | 1,2,5,6, 8,10,11 | |
| A | WO 00 22581 A (RAAF BERNHARD ;BROMBA MANFRED (DE); SIEMENS AG (DE)) 20 April 2000 (2000-04-20) * abstract; claims; figures * | 1,10 | |
| A | US 5 887 140 A (ITSUMI KAZUHIRO  ET AL) 23 March 1999 (1999-03-23) * column 1, line 49 - column 3, line 50 * * column 12, line 41 - column 13, line 36 * * figures 1,2,11 * | 1,10 | TECHNICAL FIELDS SEARCHED (Int.Cl.7) G07C |
| A | WO 98 50875 A (GTE GOVERNMENT SYST ;GTE SERVICE CORP (US)) 12 November 1998 (1998-11-12) | | |
| A | US 5 680 460 A (SCHMIDT GREGORY J  ET AL) 21 October 1997 (1997-10-21) | | |

The present search report has been drawn up for all claims

| Place of search | Date of completion of the search | Examiner |
|---|---|---|
| THE HAGUE | 16 October 2001 | Miltgen, E |

EPO FORM 1503 03.82 (P04C01)

## ANNEX TO THE EUROPEAN SEARCH REPORT
## ON EUROPEAN PATENT APPLICATION NO.

EP 01 20 1808

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2001

| Patent document cited in search report | | | Publication date | | Patent family member(s) | | Publication date |
|---|---|---|---|---|---|---|---|
| WO 0038118 | A | | 29-06-2000 | AU | 1764500 | A | 12-07-2000 |
| | | | | WO | 0038118 | A1 | 29-06-2000 |
| WO 9954851 | A | | 28-10-1999 | BR | 9815824 | A | 12-12-2000 |
| | | | | CN | 1299496 | T | 13-06-2001 |
| | | | | WO | 9954851 | A1 | 28-10-1999 |
| | | | | EP | 1074004 | A1 | 07-02-2001 |
| US 5712912 | A | | 27-01-1998 | AU | 4710996 | A | 26-02-1997 |
| | | | | WO | 9705578 | A1 | 13-02-1997 |
| | | | | US | 5737420 | A | 07-04-1998 |
| | | | | US | 6002770 | A | 14-12-1999 |
| WO 0022581 | A | | 20-04-2000 | BR | 9914420 | A | 26-06-2001 |
| | | | | WO | 0022581 | A1 | 20-04-2000 |
| | | | | EP | 1121668 | A1 | 08-08-2001 |
| US 5887140 | A | | 23-03-1999 | JP | 8329010 | A | 13-12-1996 |
| WO 9850875 | A | | 12-11-1998 | AU | 7484898 | A | 27-11-1998 |
| | | | | BR | 9808737 | A | 16-01-2001 |
| | | | | CN | 1274448 | T | 22-11-2000 |
| | | | | EP | 0980559 | A2 | 23-02-2000 |
| | | | | US | 6105010 | A | 15-08-2000 |
| | | | | US | 6202151 | B1 | 13-03-2001 |
| | | | | US | 6208746 | B1 | 27-03-2001 |
| | | | | WO | 9850875 | A2 | 12-11-1998 |
| US 5680460 | A | | 21-10-1997 | US | 5541994 | A | 30-07-1996 |
| | | | | AU | 689946 | B2 | 09-04-1998 |
| | | | | AU | 3339095 | A | 27-03-1996 |
| | | | | BR | 9509002 | A | 02-06-1998 |
| | | | | CA | 2199034 | A1 | 14-03-1996 |
| | | | | WO | 9608093 | A1 | 14-03-1996 |
| | | | | CN | 1157677 | A | 20-08-1997 |
| | | | | EP | 0780040 | A2 | 25-06-1997 |
| | | | | JP | 10505474 | T | 26-05-1998 |
| | | | | US | 5737420 | A | 07-04-1998 |
| | | | | US | 5832091 | A | 03-11-1998 |

EPO FORM P0459